# EUROPÄISCHE PATENTANMELDUNG

(11) **EP 4 473 816 A1**
(43) Veröffentlichungstag der Anmeldung: **11.12.2024**
(21) Anmeldenummer: 24168703.7
(22) Anmeldetag: 05.04.2024
(51) Int. Cl.: A01B 69/00, A01B 76/00

(54) **LANDWIRTSCHAFTLICHE ARBEITSMASCHINE**

(30) Priorität: 07.06.2023 DE 102023114968
(71) Anmelder: CLAAS E-Systems GmbH, 49201 Dissen (DE)
(72) Erfinder: Schröder, Axel, 33332 Gütersloh (DE); Korthals, Timo, 33818 Leopoldshöhe (DE); Redenius, Jannik, 32361 Pr. Oldendorf (DE); Töniges, Torben, 33602 Bielefeld (DE); Kildeby, Allan, 3060 Espergærde (DK); Jürschik, Peter, 33335 Gütersloh (DE); Bone, Sven, 49124 Georgsmarienhütte (DE); Monkenbusch, Robin, 33378 Rheda-Wiedenbrück (DE)
(74) Vertreter: CLAAS Gruppe

(57) **Zusammenfassung**

Die vorliegende Erfindung betrifft eine landwirtschaftliche Arbeitsmaschine (1) mit wenigstens einer an der landwirtschaftlichen Arbeitsmaschine angeordneten Bilderfassungsvorrichtung (3) zur Erfassung einer digitalen Abbildung (4) eines Umgebungsbereiches (5) dieser landwirtschaftlichen Arbeitsmaschine (3).

Die vorliegende Erfindung beruht auf dem allgemeinen Gedanken, dass mittels einer Anzeigeeinrichtung (8) außerhalb der landwirtschaftlichen Arbeitsmaschine (1) die digitale Abbildung (4) des Umgebungsbereiches (5) gleichzeitig mit der damit verknüpften Betriebsinformation (6) der landwirtschaftlichen Arbeitsmaschine (1) angezeigt wird.

## Beschreibung

Die vorliegende Erfindung betrifft eine landwirtschaftliche Arbeitsmaschine mit wenigstens einer an der landwirtschaftlichen Arbeitsmaschine angeordneten Bilderfassungsvorrichtung zur Erfassung einer digitalen Abbildung eines Umgebungsbereiches dieser landwirtschaftlichen Arbeitsmaschine.

Die US 10,212,400 B2 betrifft ein Arbeitsfahrzeug mit einer Kabine für einen Bediener des Arbeitsfahrzeugs. Gemäß der US 10,212,400 B2 werden Bilddaten mit einer Position dieses Arbeitsfahrzeuges verknüpft, um ein Videoprotokoll als Reaktion auf ein auslösendes Ereignis zu erzeugen, so dass das Videoprotokoll eine Dauer zwischen einem ersten Zeitpunkt und einem zweiten Zeitpunkt hat und das auslösende Ereignis einen Befehl zum Anhalten des Arbeitsfahrzeugs, einen Befehl zum Starten einer Mission, einen Befehl zum Beenden einer Mission, eine Bedienereingabe zum Aufheben eines autonomen Befehls, eine Bedienereingabe zum Aufheben eines hochautomatisierten Befehls, die Erfassung eines Hindernisses oder eine beliebige Kombination davon umfasst.

Hierbei sieht die US 10,212,400 B2 vor, dass eine Benutzerschnittstelle derart konfiguriert ist, dass der Bediener bestimmte Funktionen des Arbeitsfahrzeugs steuern kann (z. B. Starten und Anhalten des Arbeitsfahrzeugs, Anweisung an das Arbeitsfahrzeug, einer ausgewählten/geplanten Route durch das Feld zu folgen usw.). Diese Benutzerschnittstelle der US 10,212,400 B2 weist ein Display auf, das so konfiguriert ist, dass es dem Bediener Informationen anzeigt, wie z. B. die Position des Arbeitsfahrzeugs innerhalb des Feldes, die Geschwindigkeit des Arbeitsfahrzeugs, den Weg des Arbeitsfahrzeugs und das vom Bildaufnahmesystem erzeugte Videoprotokoll. Darüber hinaus ist die Benutzerschnittstelle (z. B. über das Display, über ein Audiosystem usw.) so konfiguriert, dass sie einen Bediener warnt, wenn ein Hindernis (z. B. ein Busch) erkannt wird.

Zwar kann das Videoprotokoll gemäß der US 10,212,400 B2 Bilddaten, Positionsinformationen, Zeitinformationen oder eine beliebige Kombination davon umfassen und an einen externen Bediener übermitteln, jedoch wird ist es für diesen Bediener aufgrund der Menge an Bilddaten, Positionsinformationen, Zeitinformationen und der beliebigen Kombination davon, beinahe unmöglich, ausreichend schnell und sicher zu ermitteln, ob eine Bilddatei noch aktuell und daher relevant ist, oder ob diese Bilddatei veraltet und ignorierbar ist.

Der vorliegenden Erfindung liegt die Aufgabe zugrunde, eine verbesserte Ausführungsform einer landwirtschaftlichen Arbeitsmaschine anzugeben, die den Aufwand für einen externen Bediener reduziert und dieser sicherer und einfacher erfassen kann, ob eine Bilddatei noch zeitlich aktuell und daher relevant ist, oder ob diese Bilddatei veraltet und ignorierbar ist, sodass mögliche Fehlinterpretationen seitens des externen Bedieners deutlich reduziert werden, sodass der externen Bediener beim gleichen Aufwand nunmehr eine größere Anzahl an landwirtschaftlichen Arbeitsmaschine zulässig überwachen kann.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass mittels einer Anzeigeeinrichtung außerhalb der landwirtschaftlichen Arbeitsmaschine die digitale Abbildung eines Umgebungsbereiches gleichzeitig, insbesondere gleichzeitig visuell überlagert, mit der damit verknüpften Betriebsinformation der landwirtschaftlichen Arbeitsmaschine angezeigt wird.

Die erfindungsgemäße landwirtschaftliche Arbeitsmaschine weist eine Einstellvorrichtung auf, die innerhalb der landwirtschaftlichen Arbeitsmaschine angeordnet ist. Die landwirtschaftliche Arbeitsmaschine kann als Traktor, Mähdrescher und/oder Feldhäcksler ausgebildet sein. Diese Einstellvorrichtung ist dazu vorgesehen und eingerichtet, insbesondere ausgebildet und/oder programmiert, eine Betriebssituation der landwirtschaftlichen Arbeitsmaschine zu ermitteln und die landwirtschaftliche Arbeitsmaschine in Abhängigkeit der ermittelten Betriebssituation einzustellen, insbesondere zu steuern und/oder zu regeln. Diese landwirtschaftliche Arbeitsmaschine kann Sensorvorrichtungen zur Erfassung von sensorbasierten Betriebseigenschaften der landwirtschaftlichen Arbeitsmaschine. Alternativ oder zusätzlich kann die landwirtschaftliche Arbeitsmaschine mehrere Aktoren, insbesondere elektrische Aktoren und/oder hydraulische Aktoren, aufweisen. Die Einstellvorrichtung kann dazu vorgesehen und eingerichtet, insbesondere ausgebildet und/oder programmiert, sein, die Betriebssituation mittels sensorbasierter Betriebseigenschaften zu ermitteln und die in Abhängigkeit dieser sensorbasierten Betriebseigenschaften wenigstens einen Aktor der landwirtschaftlichen Arbeitsmaschine einzustellen, insbesondere zu steuern und/oder zu regeln. Die Einstellvorrichtung der landwirtschaftlichen Arbeitsmaschine kann als Steuer- und/oder Regelvorrichtung ausgebildet sein, die eine Einstellung durch eine Steuerung und/oder Regelung bewirkt. Die Einstellvorrichtung kann eine Rechenvorrichtung und einen Datenspeicher aufweisen.

An der landwirtschaftlichen Arbeitsmaschine ist wenigstens eine Bilderfassungsvorrichtung angeordnet, die dazu vorgesehen und eingerichtet, insbesondere ausgebildet und/oder programmiert, ist, eine digitale Abbildung eines Umgebungsbereiches der landwirtschaftlichen Arbeitsmaschine zu erfassen. Die Bilderfassungsvorrichtung kann als Kameravorrichtung ausgebildet sein. Die digitale Abbildung kann ein digitales Bild und/oder eine Sequenz von digitalen Bildern bezüglich des Umgebungsbereiches der landwirtschaftlichen Arbeitsmaschine aufweisen. Der Umgebungsbereiche der landwirtschaftlichen Arbeitsmaschine kann eine Umgebung außerhalb der landwirtschaftlichen Arbeitsmaschine aufweisen.

Die Einstellvorrichtung ist dazu vorgesehen und eingerichtet, insbesondere ausgebildet und/oder programmiert, beim Vorliegen einer vorbestimmten Betriebssituation die mittels der Bilderfassungsvorrichtung erzeugte digitale Abbildung des Umgebungsbereiches mit einer Betriebsinformation der landwirtschaftlichen Arbeitsmaschine zu einer erweiterten digitalen Abbildung bezüglich der vorliegenden Betriebssituation zu verknüpfen und die erweiterte digitale Abbildung an eine außerhalb der landwirtschaftlichen Arbeitsmaschine ausgebildete Anzeigeeinrichtung zu übermitteln. Zusätzlich kann die Einstellvorrichtung dazu vorgesehen und eingerichtet, insbesondere ausgebildet und/oder programmiert, sein, in Abhängigkeit der ermittelten Betriebssituation einen Einstellungsbefehl zum Anhalten der landwirtschaftlichen Arbeitsmaschine zu initiieren.

Für die Übermittelung von Daten in Form der erweiterten digitalen Abbildung kann die Einstellvorrichtung kommunizierend, insbesondere drahtlos kommunizierend, mit der außerhalb der landwirtschaftlichen Arbeitsmaschine ausgebildeten Anzeigeeinrichtung verbunden sein. Hierbei kann es vorgesehen sein, dass diese Übermittlung der erweiterten digitalen Abbildung an die Anzeigeeinrichtung lediglich erfolgt, wenn die vorbestimmte Betriebssituation vorliegt, wohingegen während des Vorliegens aller anderen Betriebssituationen, die der vorbestimmten Betriebssituation nicht entsprechen, keine digitale Abbildung an die Anzeigeeinrichtung übermittelt wird, um die Anzahl und/oder Menge an übertragenen Daten zu reduzieren. Die vorbestimmte Betriebssituation kann datentechnisch in der Einstellvorrichtung hinterlegt sein.

Die Anzeigeeinrichtung ist dazu vorgesehen und eingerichtet, insbesondere ausgebildet und/oder programmiert, die digitale Abbildung der erweiterten digitalen Abbildung und die damit verknüpfte Betriebsinformation der erweiterten digitalen Abbildung gleichzeitig anzuzeigen, insbesondere visuell und/oder optisch sichtbar für einen außerhalb der landwirtschaftlichen Arbeitsmaschine befindlichen Bediener der Anzeigeeinrichtung anzuzeigen.

Die Anzeigeeinrichtung kann ein Teil einer außerhalb der landwirtschaftlichen Arbeitsmaschine ausgebildeten Einstellvorrichtung sein, die dazu vorgesehen und eingerichtet, insbesondere ausgebildet und/oder programmiert, ist, dass der außerhalb der landwirtschaftlichen Arbeitsmaschine befindliche Bediener die landwirtschaftliche Arbeitsmaschine einstellen, insbesondere steuern und/oder regeln kann. Die Einstellvorrichtungen innerhalb und außerhalb der landwirtschaftlichen Arbeitsmaschine können kommunizierend, insbesondere drahtlos kommunizierend, miteinander verbunden sein und derart eingerichtet, insbesondere ausgebildet und/oder programmiert, sein, dass bei einem Widerspruch zwischen den Einstellungen der landwirtschaftlichen Arbeitsmaschine, die diese Einstellvorrichtungen vorsehen, stets die Einstellungen der außerhalb der landwirtschaftlichen Arbeitsmaschine angeordneten Einstellvorrichtung ausgeführt und die Einstellungen der innerhalb der landwirtschaftlichen Arbeitsmaschine angeordneten Einstellvorrichtung ignoriert werden. Falls keine Einstellungen von der außerhalb der landwirtschaftlichen Arbeitsmaschine angeordneten Einstellvorrichtung vorliegen, werden stets die die Einstellungen der innerhalb der landwirtschaftlichen Arbeitsmaschine angeordneten Einstellvorrichtung ausgeführt.

Das gleichzeitige Anzeigen der digitalen Abbildung mit der damit verknüpften Betriebsinformation hat den Vorteil, dass der Aufwand für den externen Bediener reduziert wird, sodass dieser sicherer und einfacher erfassen kann, ob eine digitale Abbildung noch zeitlich aktuell und daher relevant ist, oder ob diese digitale Abbildung veraltet und ignorierbar ist, sodass mögliche Fehlinterpretationen seitens des externen Bedieners deutlich reduziert werden. Zusätzlich kann der dieser externen Bediener beim gleichen Aufwand eine größere Anzahl an landwirtschaftlichen Arbeitsmaschinen zulässig und sicher überwachen.

Bei einer vorteilhaften Weiterbildung der erfindungsgemäßen Lösung ist vorgesehen, dass während des gleichzeitigen Anzeigens der digitalen Abbildung und der damit verknüpften Betriebsinformation diese Betriebsinformation innerhalb der digitalen Abbildung positioniert und/oder dargestellt ist. Hierdurch wird dem Bediener der Anzeigeeinrichtung die digitale Abbildung derart angezeigt, dass innerhalb dieser digitalen Abbildung auch die Betriebsinformation visuell und/oder optisch sichtbar für den Bediener positioniert und/oder dargestellt, insbesondere bildtechnisch dargestellt, ist. Die Betriebsinformation kann von Form von visuell und/oder optisch für den Bediener erfassbaren Zahlenformen und/oder Buchstabenformen innerhalb der innerhalb der digitalen Abbildung ausgebildet sein. Dies hat den Vorteil, dass der Bediener ohne größeren Suchaufwand die digitale Abbildung und gleichzeitig die dazugehörige Betriebsinformation sicher und einfach erfassen kann.

Bei einer vorteilhaften Weiterbildung der erfindungsgemäßen Lösung ist vorgesehen, dass die Betriebsinformation der erweiterten digitalen Abbildung ein Datum und/oder einen Zeitpunkt aufweist, während dem die damit verknüpfte digitale Abbildung des Umgebungsbereiches der landwirtschaftlichen Arbeitsmaschine erfasst wurde. Hierbei kann das Datum und/oder der Zeitpunkt für den Bediener visuell und/oder optisch erfassbare Zahlen und/oder Buchstaben innerhalb der digitalen Abbildung ausbilden.

Bei einer vorteilhaften Weiterbildung der erfindungsgemäßen Lösung ist vorgesehen, dass die Betriebsinformation der erweiterten digitalen Abbildung einen sensorbasierten Betriebsparameter der landwirtschaftlichen Arbeitsmaschine aufweist, der während der Erfassung der digitalen Abbildung des Umgebungsbereiches der landwirtschaftlichen Arbeitsmaschine vorlag. Hierbei kann der sensorbasierte Betriebsparameter für den Bediener visuell und/oder optisch erfassbare Zahlen und/oder Buchstaben innerhalb der digitalen Abbildung ausbilden.

Bei einer vorteilhaften Weiterbildung der erfindungsgemäßen Lösung ist vorgesehen, dass die Betriebsinformation der erweiterten digitalen Abbildung einer satellitenbasiert erfassten Position der landwirtschaftlichen Arbeitsmaschine aufweist, an der die damit verknüpfte, digitale Abbildung des Umgebungsbereiches der landwirtschaftlichen Arbeitsmaschine erfasst wurde. Hierbei kann die satellitenbasiert erfasste Position für den Bediener visuell und/oder optisch erfassbare Zahlen und/oder Buchstaben und/oder Symbole innerhalb der digitalen Abbildung ausbilden.

Bei einer vorteilhaften Weiterbildung der erfindungsgemäßen Lösung ist vorgesehen, dass die Einstellvorrichtung dazu vorgesehen und eingerichtet ist, die vollständige Betriebsinformation der landwirtschaftlichen Arbeitsmaschine mit der erweiterten digitalen Abbildung an die außerhalb der landwirtschaftlichen Arbeitsmaschine ausgebildete Anzeigeeinrichtung zu übermitteln, und dass die Anzeigeeinrichtung dazu vorgesehen und eingerichtet ist, die digitale Abbildung der erweiterten digitalen Abbildung und lediglich ein Teil der damit verknüpften Betriebsinformation der erweiterten digitalen Abbildung gleichzeitig anzuzeigen.

Die vollständige Betriebsinformation kann beispielsweise das Datum, den Zeitpunkt, alle sensorbasierten Betriebsparameter der landwirtschaftlichen Arbeitsmaschine und/oder die satellitenbasiert erfasste Position umfassen, wobei jedoch lediglich der Zeitpunkt mit der digitalen Abbildung gleichzeitig angezeigt wird. Dies hat den Vorteil, dass zwar alle Betriebsinformation übermittelt werden, jedoch die digitale Abbildung in der optischen Darstellung weiterhin der dargestellte Kernpunkt bleibt.

Bei einer vorteilhaften Weiterbildung der erfindungsgemäßen Lösung ist vorgesehen, dass die Einstellvorrichtung dazu vorgesehen und eingerichtet, insbesondere ausgebildet und/oder programmiert, ist, das Vorliegen einer vorbestimmten Betriebssituation in Abhängigkeit von sensorbasierten Daten von Sensoren, insbesondere Sensorvorrichtungen, der landwirtschaftlichen Arbeitsmaschine und/oder in Abhängigkeit von der mittels der Bilderfassungsvorrichtung erfassten digitalen Abbildung des Umgebungsbereiches der landwirtschaftlichen Arbeitsmaschine zu ermitteln. Alternativ oder zusätzlich kann die Einstellvorrichtung dazu vorgesehen und eingerichtet, insbesondere ausgebildet und/oder programmiert, sein, das Vorliegen einer vorbestimmten Betriebssituation in Abhängigkeit von der satellitenbasierten erfassten Position der landwirtschaftlichen Arbeitsmaschine zu ermitteln.

Bei einer vorteilhaften Weiterbildung der erfindungsgemäßen Lösung ist vorgesehen, dass die landwirtschaftliche Arbeitsmaschine eine autonome landwirtschaftliche Arbeitsmaschine ausbildet. In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen autonome landwirtschaftliche Arbeitsmaschinen zum Einsatz, die sich dadurch auszeichnen, dass kein Bediener in einer Kabine zur Steuerung derselben vorhanden ist bzw. sein muss. Derartige autonome landwirtschaftliche Arbeitsmaschinen werden daher auch als unbemannte landwirtschaftliche Arbeitsmaschinen bezeichnet. Eine solche autonome landwirtschaftliche Arbeitsmaschine kann fahrerkabienenfrei ausgebildet sein und/oder wenigstens ein Arbeitsaggregat, insbesondere ein adaptiertes Arbeitsaggregat, zur Bearbeitung des landwirtschaftlichen Feldes aufweisen.

Bei einer vorteilhaften Weiterbildung der erfindungsgemäßen Lösung ist vorgesehen, dass die Einstellvorrichtung dazu vorgesehen und eingerichtet ist, vor der Übermittlung der erweiterten digitalen Abbildung die Betriebsinformation innerhalb der digitalen Abbildung zu positionieren, und/oder dass die Anzeigeeinrichtung dazu vorgesehen und eingerichtet ist, basierend auf der von der Einstellvorrichtung übermittelten erweiterten digitalen Abbildung die Betriebsinformation innerhalb der digitalen Abbildung zu positionieren. Die bildtechnische Positionierung der Betriebsinformation innerhalb der digitalen Abbildung vor der Übermittlung der erweiterten digitalen Abbildung hat den Vorteil, dass bei einer gleichen Informationsmenge weniger Datensätze und/oder eine geringe Datenmenge übertragen werden muss. Die bildtechnische Positionierung der Betriebsinformation innerhalb der der digitalen Abbildung mittels der Anzeigeeinrichtung hat den Vorteil, dass die Positionierung der Betriebsinformation situationsabhängig und/oder gemäß Einstellungen der Anzeigeeinrichtung seitens Bedieners der Anzeigeeinrichtung anpassungsfähig erfolgen kann.

Bei einer vorteilhaften Weiterbildung der erfindungsgemäßen Lösung ist vorgesehen, dass die Einstellvorrichtung ein Bildauswertungsmodul aufweist, welches dazu vorgesehen und eingerichtet ist, basierend auf der digitalen Abbildung des Umgebungsbereiches zu ermitteln, ob eine vorbestimmten Betriebssituation vorliegt. Die vorbestimmten Betriebssituation kann vorbestimme Objekte, wie beispielweise Tiere, Menschen oder andere sich bewegende Objekte betreffen, betreffen, wobei das Bildauswertungsmodul dazu ausgebildet und/oder programmiert sein kann, diese vorbestimmen Objekte innerhalb der digitalen Abbildung des Umgebungsbereiches zu erkennen und darauf basierend zu ermitteln, ob die vorbestimmten Betriebssituation vorliegt. Hierfür kann das Bildauswertungsmodul eine computergestützte Objekterkennung, insbesondere eine mittels maschinellen Lernens trainierte künstliche Intelligenz zur Objekterkennung, einsetzen.

Bei einer vorteilhaften Weiterbildung der erfindungsgemäßen Lösung ist vorgesehen, dass die vorbestimmte Betriebssituation eine Fahrsituation der landwirtschaftlichen Arbeitsmaschine aufweist, und/oder dass die vorbestimmte Betriebssituation eine Fehlersituation der der landwirtschaftlichen Arbeitsmaschine aufweist, und/oder dass die vorbestimmte Betriebssituation eine, insbesondere zukünftige, Kollisionssituation der landwirtschaftlichen Arbeitsmaschine aufweist, und/oder dass die vorbestimmte Betriebssituation eine Position der der landwirtschaftlichen Arbeitsmaschine bezüglich eines landwirtschaftlichen Feldes aufweist, und/oder dass die vorbestimmte Betriebssituation sich auf ein Arbeitsaggregat der landwirtschaftlichen Arbeitsmaschine bezieht.

Bei einer vorteilhaften Weiterbildung der erfindungsgemäßen Lösung ist vorgesehen, dass die landwirtschaftliche Arbeitsmaschine mehrere Bilderfassungsvorrichtungen aufweist, um eine vollständige Erfassung des gesamten Umgebungsbereiches der landwirtschaftlichen Arbeitsmaschine zu bewirken. Hierdurch wird eine 360°-Rundumsicht um die landwirtschaftliche Arbeitsmaschine ermöglicht.

Ferner betrifft die Erfindung die Anzeigeeinrichtung für die erfindungsgemäße landwirtschaftliche Arbeitsmaschine, die dazu vorgesehen und eingerichtet ist, die digitale Abbildung einer erweiterten digitalen Abbildung und die damit verknüpfte Betriebsinformation einer erweiterten digitalen Abbildung gleichzeitig anzuzeigen, die von der Einstellvorrichtung der landwirtschaftlichen Arbeitsmaschine übermittelt wurde. Diese Anzeigeeinrichtung kann ein und/oder mehrere zuvor als auch nachfolgend beschriebene Details aufweisen.

Ferner betrifft die Erfindung die einstellungstechnische Verwendung von in einer Datenbank hinterlegten erweiterten digitalen Abbildungen, die mittel der Einstellvorrichtung der erfindungsgemäßen landwirtschaftlichen Arbeitsmaschine erzeugt und/oder übermittelt wurden, um eine weitere autonome landwirtschaftliche Arbeitsmaschine basierend auf diesen erweiterten digitalen Abbildungen einzustellen, insbesondere mit Steuersignalen zu steuern und/oder Regelsignalen zu regeln. Diese einstellungstechnische Verwendung kann ein und/oder mehrere zuvor als auch nachfolgend beschriebene Details aufweisen.

Bei einer vorteilhaften Weiterbildung der erfindungsgemäßen Lösung ist vorgesehen, dass zu den hinterlegten erweiterten digitalen Abbildungen zusätzlich eine einstellungstechnische Reaktion eines Bedieners der Anzeigeeinrichtung erfindungsgemäß in der Datenbank hinterlegt ist, um die weitere autonome landwirtschaftliche Arbeitsmaschine basierend den erweiterten digitalen Abbildungen und der dazu gespeicherten einstellungstechnischen Reaktion des Bedieners einzustellen. Hierdurch kann die Anzahl der erforderlichen einstellungstechnischen Reaktion des Bedieners reduziert werden.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße landwirtschaftliche Arbeitsmaschine mit einer externen Anzeigeeinrichtung zum Anzeigen einer erweiterten digitalen Abbildung, und
- Fig. 2: ein datentechnisches Verfahren zur Erstellung der erweiterten digitalen Abbildung, und
- Fig. 3: ein weiteres datentechnisches Verfahren zur Erstellung der erweiterten digitalen Abbildung.

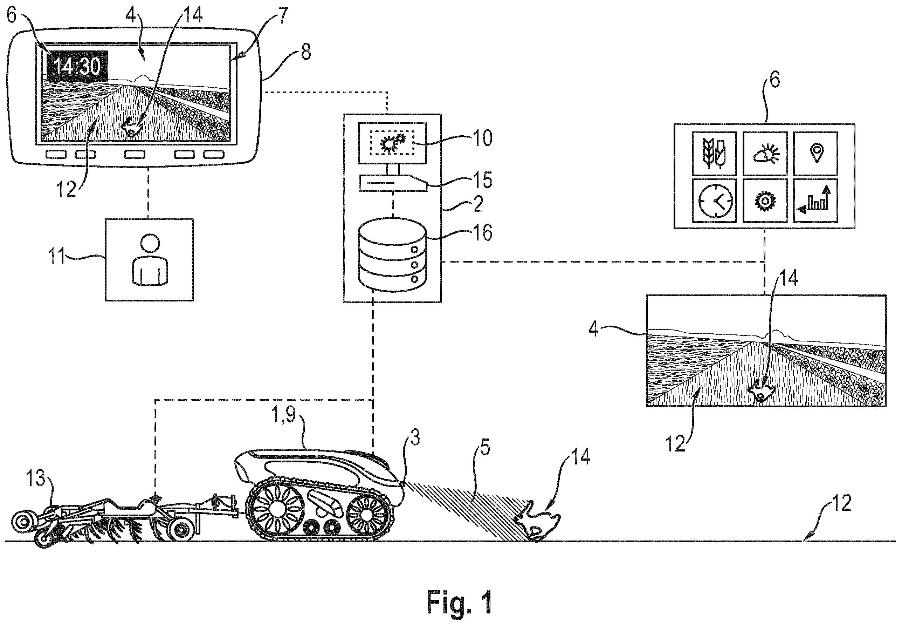

Fig. 1 zeigt eine erfindungsgemäße landwirtschaftliche Arbeitsmaschine 1, die beispielhaft als autonome landwirtschaftliche Arbeitsmaschine 9 ausgebildet ist. Diese autonome landwirtschaftliche Arbeitsmaschine 9 weist wenigstens ein Arbeitsaggregat 13 zur Bearbeitung eines landwirtschaftlichen Feldes 12 auf und ist fahrerkabienenfrei ausgebildet, sodass ein menschlicher Bediener 11 sich nicht innerhalb der autonomen landwirtschaftlichen Arbeitsmaschine 9 aufhalten kann und sich daher stets außerhalb dieser autonomen landwirtschaftliche Arbeitsmaschine 9 befindet. Derartige autonome landwirtschaftliche Arbeitsmaschinen 1,9 werden daher auch als unbemannte landwirtschaftliche Arbeitsmaschinen bezeichnet.

Innerhalb der landwirtschaftlichen Arbeitsmaschine 1 ist wenigstens eine Einstellvorrichtung 2 ausgebildet, die dazu vorgesehen und eingerichtet ist, eine Betriebssituation der landwirtschaftlichen Arbeitsmaschine 1 zu ermitteln und die landwirtschaftliche Arbeitsmaschine 1 in Abhängigkeit der ermittelten Betriebssituation einzustellen. Diese landwirtschaftliche Arbeitsmaschine kann nicht dargestellte Sensorvorrichtungen zur Erfassung von sensorbasierten Betriebseigenschaften der landwirtschaftlichen Arbeitsmaschine 1. Die Einstellvorrichtung 2 kann dazu vorgesehen und eingerichtet, insbesondere ausgebildet und/oder programmiert, sein, die Betriebssituation mittels sensorbasierter Betriebseigenschaften zu ermitteln und die in Abhängigkeit dieser sensorbasierten Betriebseigenschaften wenigstens die landwirtschaftliche Arbeitsmaschine einzustellen, insbesondere zu steuern und/oder zu regeln. Die Einstellvorrichtung 2 der landwirtschaftlichen Arbeitsmaschine 1 ist daher als Steuer- und/oder Regelvorrichtung ausgebildet, die eine solche Einstellung durch eine Steuerung und/oder Regelung bewirkt. Die Einstellvorrichtung 2 kann hierfür eine Rechenvorrichtung 15 und einen Datenspeicher 16 aufweisen. Beispielsweise kann eine mittels der sensorbasierten Betriebseigenschaften erfasste Betriebssituation eine Fehlfunktion der landwirtschaftlichen Arbeitsmaschine 1 aufgrund eines Defektes sein, wobei hierauf basierend die Einstellvorrichtung 2 die Fahrt der landwirtschaftliche Arbeitsmaschine 1 anhält und/oder die landwirtschaftliche Arbeitsmaschine 1 abschaltet.

An der landwirtschaftlichen Arbeitsmaschine 1 ist eine Bilderfassungsvorrichtung 3 zur Erfassung einer digitalen Abbildung 4 eines Umgebungsbereiches 5 der landwirtschaftlichen Arbeitsmaschine 1 angeordnet. Diese Bilderfassungsvorrichtung 3 kann als Kameravorrichtung ausgebildet sein. Die digitale Abbildung 4 kann ein digitales Bild und/oder eine Sequenz von digitalen Bildern 4 bezüglich des Umgebungsbereiches 5 der landwirtschaftlichen Arbeitsmaschine 1 aufweisen.

Die Einstellvorrichtung 2 ist dazu vorgesehen und eingerichtet beim Vorliegen einer vorbestimmten Betriebssituation, wie beispielweise in der Fig. 1 angedeutet mit einem Auftauchen eines lebendes Kollisionsobjektes 14 in Form eines Tieres, die dazugehörige mittels der Bilderfassungsvorrichtung 3 erzeugte digitale Abbildung 4 des Umgebungsbereiches 5 mit einer Betriebsinformation 6 der landwirtschaftlichen Arbeitsmaschine 1 zu einer erweiterten digitalen Abbildung 7 bezüglich der vorliegenden Betriebssituation zu verknüpfen und diese erweiterte digitale Abbildung 7 an eine außerhalb der landwirtschaftlichen Arbeitsmaschine 1 ausgebildete Anzeigeeinrichtung 8 zu übermitteln. Zusätzlich kann die Einstellvorrichtung 2 dazu vorgesehen und eingerichtet sein, in Abhängigkeit dieser ermittelten Betriebssituation einen Einstellungsbefehl zum Anhalten der landwirtschaftlichen Arbeitsmaschine 1 initiieren.

Für die Übermittelung dieser Daten in Form der erweiterten digitalen Abbildung 7 ist die Einstellvorrichtung 2 drahtlos kommunizierend mit der außerhalb der landwirtschaftlichen Arbeitsmaschine 1 ausgebildeten Anzeigeeinrichtung 8 verbunden. Hierbei kann es vorgesehen sein, dass diese Übermittlung der erweiterten digitalen Abbildung 7 an die Anzeigeeinrichtung 8 lediglich erfolgt, wenn die vorbestimmte Betriebssituation vorliegt, wohingegen während des Vorliegens aller anderen Betriebssituationen, die der vorbestimmten Betriebssituation nicht entsprechen, keine digitale Abbildung 4 und auch keine erweiterte digitale Abbildung 7 an die Anzeigeeinrichtung 8 übermittelt wird, um die Anzahl und/oder Menge an übertragenen Daten zu reduzieren. Die vorbestimmte Betriebssituation kann datentechnisch in der Einstellvorrichtung 2 hinterlegt sein.

Die Anzeigeeinrichtung 8 ist dazu vorgesehen und eingerichtet, die digitale Abbildung 4 der erweiterten digitalen Abbildung 7 und die damit verknüpfte Betriebsinformation 6 der erweiterten digitalen Abbildung 7 gleichzeitig anzuzeigen, insbesondere visuell und/oder optisch sichtbar für den außerhalb der landwirtschaftlichen Arbeitsmaschine 1 befindlichen Bediener 11 der Anzeigeeinrichtung 8 anzuzeigen.

Die Anzeigeeinrichtung 8 kann ein Teil einer außerhalb der landwirtschaftlichen Arbeitsmaschine 1 ausgebildeten und nicht dargestellten Einstellvorrichtung sein, die dazu vorgesehen und eingerichtet, ist, dass der außerhalb der landwirtschaftlichen Arbeitsmaschine 1 befindliche Bediener 11 die landwirtschaftliche Arbeitsmaschine 1 steuern und/oder regeln kann. Bei einem Widerspruch zwischen den Einstellungen der landwirtschaftlichen Arbeitsmaschine 1, die diese Einstellvorrichtungen vorsehen, werden stets die Einstellungen der außerhalb der landwirtschaftlichen Arbeitsmaschine angeordneten und nicht dargestellten Einstellvorrichtung ausgeführt und die Einstellungen der innerhalb der landwirtschaftlichen Arbeitsmaschine 1 angeordneten Einstellvorrichtung 2 ignoriert. Falls keine Einstellungen von der außerhalb der landwirtschaftlichen Arbeitsmaschine 1 angeordneten und nicht dargestellten Einstellvorrichtung vorliegen, werden stets die die Einstellungen der innerhalb der landwirtschaftlichen Arbeitsmaschine 1 angeordneten Einstellvorrichtung 2 ausgeführt.

Das gleichzeitige Anzeigen der digitalen Abbildung 4 mit der damit verknüpften Betriebsinformation 6 hat den Vorteil, dass der Aufwand für den externen Bediener 11 reduziert wird, sodass dieser sicherer und einfacher erfassen kann, ob eine digitale Abbildung 4, die angezeigt wird, noch zeitlich aktuell und daher relevant ist, oder ob diese digitale Abbildung 4 veraltet und ignorierbar ist. Hierdurch werden mögliche Fehlinterpretationen seitens des externen Bedieners 11 deutlich reduziert, sodass dieser externe Bediener 11 beim gleichen Aufwand nunmehr eine größere Anzahl an landwirtschaftlichen Arbeitsmaschinen 1 zulässig und sicher überwachen kann.

Während des gleichzeitigen Anzeigens der digitalen Abbildung 4 und der damit verknüpften Betriebsinformation 6 ist vorgesehen, dass diese Betriebsinformation 6 innerhalb der digitalen Abbildung 4 positioniert und/oder dargestellt ist. Hierdurch wird dem Bediener 11 der Anzeigeeinrichtung 8 die erweiterte digitale Abbildung 7 derart angezeigt, dass innerhalb der digitalen Abbildung 4 auch die Betriebsinformation 6 visuell und/oder optisch sichtbar für den Bediener 11 bildtechnisch dargestellt ist. Die Betriebsinformation 6 kann von Form von visuell und/oder optisch für den Bediener 11 erfassbaren Zahlenformen und/oder Buchstabenformen innerhalb der innerhalb der digitalen Abbildung 4 ausgebildet sein. Dies hat den Vorteil, dass der Bediener 11 ohne größeren Suchaufwand die digitale Abbildung 4 und gleichzeitig die dazugehörige Betriebsinformation 6 sicher und einfach erfassen kann.

In der Fig. 1, Fig. 2 und Fig. 3 ist die Betriebsinformation 6 der erweiterten digitalen Abbildung 4 ein Zeitpunkt, nämlich 14:30, jedoch kann die Betriebsinformation 6 der erweiterten digitalen Abbildung 7 alternativ oder zusätzlich ein Datum, einen sensorbasierten Betriebsparameter der landwirtschaftlichen Arbeitsmaschine 1, und/oder eine satellitenbasierte erfasste Position der landwirtschaftlichen Arbeitsmaschine 1 auf dem landwirtschaftlichen Feld 12 betreffen.

Die die Einstellvorrichtung 2 kann dazu vorgesehen und eingerichtet sein, die vollständige Betriebsinformation 6 der landwirtschaftlichen Arbeitsmaschine 1 mit der erweiterten digitalen Abbildung 7 an die außerhalb der landwirtschaftlichen Arbeitsmaschine 1 ausgebildete Anzeigeeinrichtung 8 vollständig zu übermitteln, wobei die Anzeigeeinrichtung 8 dazu vorgesehen und eingerichtet sein kann, die digitale Abbildung 4 der erweiterten digitalen Abbildung 7 und lediglich ein Teil der damit verknüpften Betriebsinformation 6 der erweiterten digitalen Abbildung 7 gleichzeitig anzuzeigen. Außerdem kann die Einstellvorrichtung 2 ein Bildauswertungsmodul 10 aufweisen, welches dazu vorgesehen und eingerichtet ist, basierend auf der digitalen Abbildung 4 des Umgebungsbereiches 5 zu ermitteln, ob eine vorbestimmten Betriebssituation vorliegt.

Die landwirtschaftliche Arbeitsmaschine 1 kann mehrere in der Fig. 1 nicht dargestellte Bilderfassungsvorrichtungen 3 aufweisen, um eine vollständige Erfassung des gesamten Umgebungsbereiches der landwirtschaftlichen Arbeitsmaschine 1 zu bewirken. Hierdurch wird eine 360°-Rundumsicht um die landwirtschaftliche Arbeitsmaschine 1 ermöglicht.

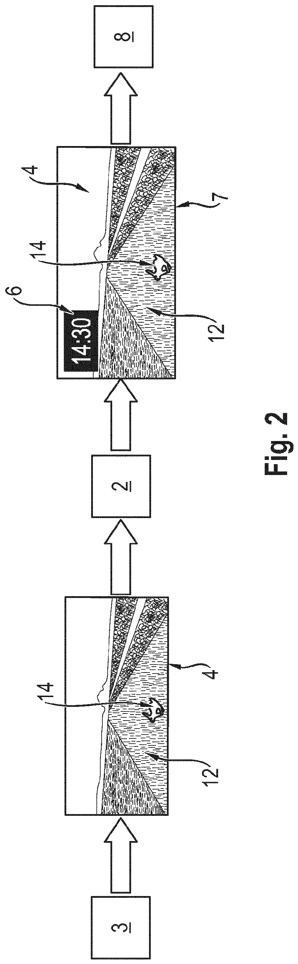

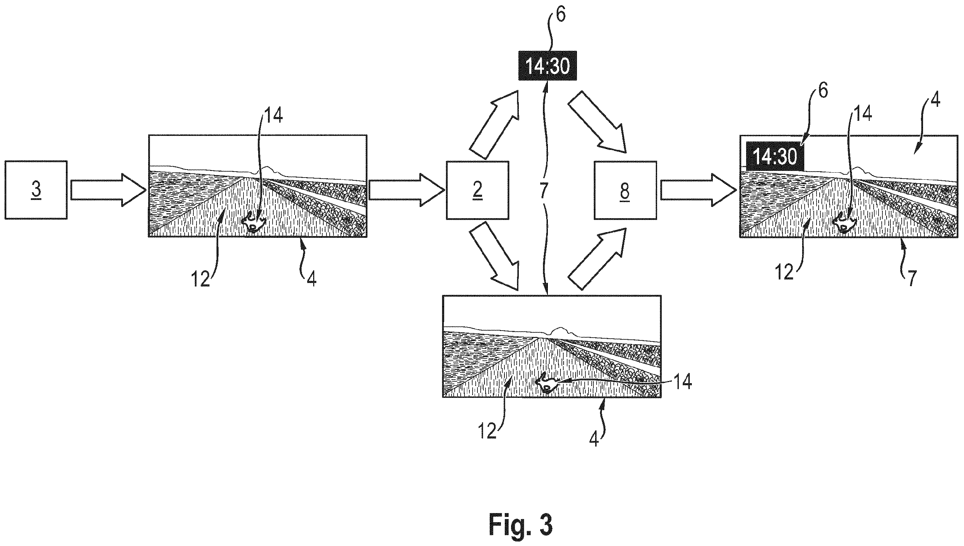

In der Fig. 2 ist die Einstellvorrichtung 2 dazu vorgesehen und eingerichtet ist, vor der Übermittlung der erweiterten digitalen Abbildung 7 die Betriebsinformation 6 innerhalb der digitalen Abbildung 4 zu positionieren, wohingegen in der Fig. 3 die Anzeigeeinrichtung 8 alternativ oder zusätzlich dazu vorgesehen und eingerichtet ist, basierend auf der von der Einstellvorrichtung 2 übermittelten erweiterten digitalen Abbildung 7 die Betriebsinformation 6 innerhalb der digitalen Abbildung 4 zu positionieren.

### Bezugszeichenliste

- 1: landwirtschaftliche Arbeitsmaschine
- 2: Einstellvorrichtung
- 3: Bilderfassungsvorrichtung
- 4: digitale Abbildung
- 5: Umgebungsbereich
- 6: Betriebsinformation
- 7: erweiterte digitale Abbildung
- 8: Anzeigeeinrichtung
- 9: autonome landwirtschaftlichen Arbeitsmaschine
- 10: Bildauswertungsmodul
- 11: Bediener der Anzeigeeinrichtung
- 12: landwirtschaftliches Feld
- 13: Arbeitsaggregat
- 14: lebendes Kollisionsobjekt
- 15: Rechenvorrichtung
- 16: Datenspeicher

## Patentansprüche

1. Landwirtschaftliche Arbeitsmaschine (1)
- mit einer Einstellvorrichtung (2) innerhalb der landwirtschaftlichen Arbeitsmaschine (1), die dazu vorgesehen und eingerichtet ist, eine Betriebssituation der landwirtschaftlichen Arbeitsmaschine (1) zu ermitteln und die landwirtschaftliche Arbeitsmaschine (1) in Abhängigkeit der ermittelten Betriebssituation einzustellen,
- mit wenigstens einer an der landwirtschaftlichen Arbeitsmaschine (1) angeordneten Bilderfassungsvorrichtung (3) zur Erfassung einer digitalen Abbildung (4) eines Umgebungsbereiches (5) der landwirtschaftlichen Arbeitsmaschine (1),
- wobei die Einstellvorrichtung (2) dazu vorgesehen und eingerichtet ist, beim Vorliegen einer vorbestimmten Betriebssituation die mittels der Bilderfassungsvorrichtung (3) erzeugte digitale Abbildung (4) des Umgebungsbereiches (5) mit einer Betriebsinformation (6) der landwirtschaftlichen Arbeitsmaschine (1) zu einer erweiterten digitalen Abbildung (7) bezüglich der vorliegenden Betriebssituation zu verknüpfen und die erweiterte digitale Abbildung (7) an eine außerhalb der landwirtschaftlichen Arbeitsmaschine (1) ausgebildete Anzeigeeinrichtung (8) zu übermitteln,
**dadurch gekennzeichnet,**
- **dass** die Anzeigeeinrichtung (8) dazu vorgesehen und eingerichtet ist, die digitale Abbildung (4) der erweiterten digitalen Abbildung (7) und die damit verknüpfte Betriebsinformation (6) der erweiterten digitalen Abbildung (7) gleichzeitig anzuzeigen.

2. Landwirtschaftliche Arbeitsmaschine (1) nach Anspruch 1,
**dadurch gekennzeichnet,**
**dass** während des gleichzeitigen Anzeigens der digitalen Abbildung (4) und der damit verknüpften Betriebsinformation (6) diese Betriebsinformation (6) innerhalb der digitalen Abbildung (4) positioniert und/oder dargestellt ist.

3. Landwirtschaftliche Arbeitsmaschine (1) nach einem der vorhergehenden Ansprüche,
**dadurch gekennzeichnet,**
**dass** die Betriebsinformation (6) der erweiterten digitalen Abbildung (7) ein Datum und/oder einen Zeitpunkt aufweist, während dem die damit verknüpfte digitale Abbildung (4) des Umgebungsbereiches (5) der landwirtschaftlichen Arbeitsmaschine (1) erfasst wurde.

4. Landwirtschaftliche Arbeitsmaschine (1) nach einem der vorhergehenden Ansprüche,
**dadurch gekennzeichnet,**
**dass** die Betriebsinformation (6) der erweiterten digitalen Abbildung (7) einen sensorbasierten Betriebsparameter der landwirtschaftlichen Arbeitsmaschine (1) aufweist, der während der Erfassung der digitalen Abbildung (4) des Umgebungsbereiches (5) der landwirtschaftlichen Arbeitsmaschine (1) vorlag.

5. Landwirtschaftliche Arbeitsmaschine (1) nach einem der vorhergehenden Ansprüche,
**dadurch gekennzeichnet,**
**dass** die Betriebsinformation (6) der erweiterten digitalen Abbildung (7) eine satellitenbasierte erfasste Position der landwirtschaftlichen Arbeitsmaschine (1) aufweist, an der die damit verknüpfte digitale Abbildung (4) des Umgebungsbereiches (5) der landwirtschaftlichen Arbeitsmaschine (1) erfasst wurde.

6. Landwirtschaftliche Arbeitsmaschine (1) nach einem der vorhergehenden Ansprüche,
**dadurch gekennzeichnet,**
- **dass** die Einstellvorrichtung (2) dazu vorgesehen und eingerichtet ist, die vollständige Betriebsinformation (6) der landwirtschaftlichen Arbeitsmaschine (1) mit der erweiterten digitalen Abbildung (7) an die außerhalb der landwirtschaftlichen Arbeitsmaschine (1) ausgebildete Anzeigeeinrichtung (8) zu übermitteln, und dass
- die Anzeigeeinrichtung (8) dazu vorgesehen und eingerichtet ist, die digitale Abbildung (4) der erweiterten digitalen Abbildung (7) und lediglich ein Teil der damit verknüpften Betriebsinformation (6) der erweiterten digitalen Abbildung (7) gleichzeitig anzuzeigen.

7. Landwirtschaftliche Arbeitsmaschine (1) nach einem der vorhergehenden Ansprüche,
**dadurch gekennzeichnet,**
**dass** die Einstellvorrichtung (2) dazu vorgesehen und eingerichtet ist, das Vorliegen einer vorbestimmten Betriebssituation in Abhängigkeit von sensorbasierten Daten von Sensoren der landwirtschaftlichen Arbeitsmaschine (1) und/oder in Abhängigkeit von der mittels der Bilderfassungsvorrichtung (3) erfassten digitalen Abbildung (4) des Umgebungsbereiches (5) der landwirtschaftlichen Arbeitsmaschine (1) zu ermitteln.

8. Landwirtschaftliche Arbeitsmaschine (1) nach einem der vorhergehenden Ansprüche,
**dadurch gekennzeichnet,**
**dass** die landwirtschaftliche Arbeitsmaschine (1) eine autonome landwirtschaftliche Arbeitsmaschine (9) ausbildet.

9. Landwirtschaftliche Arbeitsmaschine (1) nach einem der vorhergehenden Ansprüche,
**dadurch gekennzeichnet,**
- **dass** die Einstellvorrichtung (2) dazu vorgesehen und eingerichtet ist, vor der Übermittlung der erweiterten digitalen Abbildung (7) die Betriebsinformation (6) innerhalb der digitalen Abbildung (4) zu positionieren, und/oder
- **dass** die Anzeigeeinrichtung (8) dazu vorgesehen und eingerichtet ist, basierend auf der von der Einstellvorrichtung (2) übermittelten erweiterten digitalen Abbildung (7) die Betriebsinformation (6) innerhalb der digitalen Abbildung (4) zu positionieren.

10. Landwirtschaftliche Arbeitsmaschine (1) nach einem der vorhergehenden Ansprüche,
**dadurch gekennzeichnet,**
**dass** die Einstellvorrichtung (2) ein Bildauswertungsmodul (10) aufweist, welches dazu vorgesehen und eingerichtet ist, basierend auf der digitalen Abbildung (4) des Umgebungsbereiches (5) zu ermitteln, ob eine vorbestimmten Betriebssituation vorliegt.

11. Landwirtschaftliche Arbeitsmaschine (1) nach einem der vorhergehenden Ansprüche,
**dadurch gekennzeichnet,**
- **dass** die vorbestimmte Betriebssituation eine Fahrsituation aufweist, und/oder
- **dass** die vorbestimmte Betriebssituation eine Fehlersituation aufweist, und/oder
- **dass** die vorbestimmte Betriebssituation eine Kollisionssituation aufweist, und/oder
- **dass** die vorbestimmte Betriebssituation eine Position bezüglich eines landwirtschaftlichen Feldes (12) aufweist, und/oder
- **dass** die vorbestimmte Betriebssituation sich auf ein Arbeitsaggregat (13) der landwirtschaftlichen Arbeitsmaschine (1) bezieht.

12. Landwirtschaftliche Arbeitsmaschine (1) nach einem der vorhergehenden Ansprüche,
**dadurch gekennzeichnet,**
**dass** die landwirtschaftliche Arbeitsmaschine (1) mehrere Bilderfassungsvorrichtungen (3) aufweist, um eine vollständige Erfassung des gesamten Umgebungsbereiches der landwirtschaftlichen Arbeitsmaschine (1) zu bewirken.

13. Anzeigeeinrichtung (8) für eine landwirtschaftliche Arbeitsmaschine (1) nach einem der vorhergehenden Ansprüche, die dazu vorgesehen und eingerichtet ist, die digitale Abbildung (4) einer erweiterten digitalen Abbildung (7) und die damit verknüpfte Betriebsinformation (6) einer erweiterten digitalen Abbildung (7) gleichzeitig anzuzeigen, die von der Einstellvorrichtung (2) der landwirtschaftlichen Arbeitsmaschine (1) übermittelt wurde.

14. Einstellungstechnische Verwendung von in einer Datenbank hinterlegten erweiterten digitalen Abbildungen (7), die mittel der Einstellvorrichtung (2) der landwirtschaftlichen Arbeitsmaschine (1) nach einem der Ansprüche 1 bis 12 erzeugt und/oder übermittelt wurden, um eine weitere autonome landwirtschaftliche Arbeitsmaschine basierend auf diesen erweiterten digitalen Abbildungen (7) einzustellen.

15. Einstellungstechnische Verwendung nach Anspruch 14,
**dadurch gekennzeichnet,**
**dass** zu den hinterlegten erweiterten digitalen Abbildungen (7) zusätzlich eine einstellungstechnische Reaktion eines Bedieners (11) der Anzeigeeinrichtung (8) nach Anspruch 13 in der Datenbank hinterlegt ist, um die weitere autonome landwirtschaftliche Arbeitsmaschine basierend den erweiterten digitalen Abbildungen (7) und der in der Datenbank hinterlegten einstellungstechnischen Reaktion des Bedieners (11) einzustellen.
